# EUROPEAN PATENT SPECIFICATION

(11) **EP 0 991 576 B1**
(45) Date of publication and mention of the grant of the patent: **16.10.2002**
(21) Application number: 98931612.0
(22) Date of filing: 26.06.1998
(51) Int. Cl.: B65D 65/38, B65D 81/18

(54) **Microcellular container and method for storing products at low temperature in such a container**
Mikrozellularer Behälter und Verfahren zum Bewahren von Produkten bei niedriger Temperatur in diesem Behälter
Récipient microcellulaire et procédé d'entreposage de produits à basse température dans ce récipient

(30) Priority: 26.06.1997 US 883275
(43) Date of publication of application: 12.04.2000
(73) Proprietor: Trexel Inc., Woburn, MA 01801 (US)
(72) Inventor: CHRISTEL, Andreas, Piscataway, NJ 08854 (US); PALLAVER, Matthew, Lexington, MA 02173 (US); WALAT, Robert, H., Boston, MA 02116 (US)
(74) Representative: HOFFMANN - EITLE
(86) International application number: US9813268
(87) International publication number: WO99000313

(56) References cited:
- WO-A-89/00918
- WO-A-98/08667
- US-A- 4 473 665
- US-A- 4 728 559
- US-A- 5 158 986

## Description

### Field of the Invention

The present invention relates generally to containers, and more particularly to containers made of microcellular polymeric material.

### Background of the Invention

Food storage containers, in particular polymeric food storage containers, enjoy phenomenally widespread use. Trays, plates, bowls, and other food containers with and without lids or other covers have been made from a variety of polymeric materials, for use in the packaging of pre-prepared food products, either frozen, refrigerated, shelf-stable, or fresh. An increasingly-successful class of food storage containers include those filled with pre-prepared food items for cooking or heating in a microwave or conventional oven. Food stored and sold in such containers typically must be kept frozen, or at least refrigerated prior to use.

Polymeric food storage containers should have good impact strength for several reasons. First, if the containers are dropped, it is, of course, best if they do not break. Additionally, since the containers are expected to perform well across a wide range of temperatures, and under conditions in which temperature changes drastically and rapidly, the container should have very good impact properties over the temperature range within which the container is used.

Typically, the impact properties of polymeric materials at low temperatures are reduced relative to those properties at higher temperatures. Polymeric materials include a well-known characteristic "brittle/ductile transition temperature" at which the energy absorbed before fracture (fracture energy) changes markedly. The brittle/ductile transition temperature is a temperature (typically a narrow range of temperature) above which impact properties are relatively good (e.g. the material is ductile) and below which impact properties are markedly poorer (e.g. the material is brittle). That is, impact properties typically become poorer, gradually, as temperature drops, but become much poorer, very quickly, at a particular brittle/ductile transition temperature. Brittle/ductile transition temperatures for most polymers absent auxiliary impact modifiers fall within (or are above) a temperature range at which food is desirably stored. Accordingly, impact modifiers such as rubber particles typically are added to polymeric food storage containers, adding processing steps and related cost.

Foamed polymeric materials are known, and typically are produced by providing a chemical or a physical blowing agent into a molten polymeric stream, mixing the blowing agent with the polymer, and extruding the mixture into the atmosphere while shaping the mixture. Exposure to atmospheric conditions causes the blowing agent to expand and to form cells in the polymer. Batch processes, that is, those in which a batch of material is treated to make a foam, rather than continuous treatment of a stream of material, are known.

It is generally accepted that foaming polymeric materials raises their brittle/ductile transition temperature. Thus, it would be expected that foamed materials would exhibit poor low temperature impact properties.

Microcellular material is defined as cell-containing material of very small cell size. U.S. Patent No. 4,473,665 (Martini-Vvedensky, et al.; September 25, 1984) describes a process for making foamed polymer having cells less than about 100 microns in diameter. In the described technique, a material precursor is saturated with a blowing agent, the material is placed under high pressure, and pressure is rapidly dropped to nucleate the blowing agent and to allow the formation of cells. The material then is frozen rapidly to maintain a desired distribution of microcells.

U.S. Patent No. 5,158,986 (Cha, et al.; October 27, 1992) describes formation of microcellular polymeric material using a supercritical fluid as a blowing agent. In a batch process of Cha, et al., a plastic article is submerged in supercritical fluid for a period of time, and then quickly returned to ambient conditions. In a continuous process, a polymeric sheet is extruded, then run through rollers in a container of supercritical fluid at high pressure, and then exposed quickly to ambient conditions. In another continuous process, a supercritical fluid-saturated molten polymeric stream is established. The stream is rapidly heated, and the resulting thermodynamic instability (solubility change) creates sites of nucleation while the system is maintained under pressure preventing significant growth of cells. The material then can be injected into a mold cavity where pressure is reduced and cells are allowed to grow.

### Summary of the Invention

The present invention is based upon the applicants' surprising discovery that formation of an article such as a polymeric article into a microcellular article significantly decreases the ductile/brittle transition temperature of the article relative to the article as unfoamed, whether or not it includes an impact modifier.

According to a first aspect, the present invention provides a method for low-temperature storage comprising the step of storing in a container formed from a microcellular material at a temperature of less than 4.4°C (40°F), the microcellular material containing cells of a size less than 100 µm in diameter and/or having a cell density of more than 10⁶ cells/cm³.

In a first preferred embodiment of this aspect, the container is stored for at least about one hour. Preferably, the storage temperature is less than 0°C (32°F), and more preferably less than -6.7°C (20°F). The period of time of such storage can be increased to at least one day, or longer in accordance with the invention. This set of methods embraces a variety of useful food storage conditions across a temperature range at which higher-than-expected impact properties of the polymeric container are observed.

In this aspect, the container may be used to store medical products, chemical reactants or foods. In the latter case, the food may preferably be cooked in the container such as at a temperature of at least 121°C (250°F) for at least 10 minutes. Such cooking can for example be carried out in a microwave oven.

According to a second aspect, the invention provides a container formed from a microcellular material, containing frozen food, a frozen medical product or a frozen chemical reactant, the material containing cells of a size less than 100 µm in diameter and/or having a cell density of more than 10⁶ cells/cm³. In one preferred embodiment, the container has an opening. In this case, the container may include a lid which sealingly engages with the container opening. The lid may preferably be in the form of a plastic film which adheres to the portion of the container defining the opening. The cover can be one of a variety of types, as described in more detail below. The article can also include instructions for storage of food in the article.

In a third embodiment, the invention provides the use of a container formed from a microcellular material containing cells of a size less than 100 µm in diameter and/or having a cell density of more than 10⁶ cells/cm³ as a storage container at a temperature of less than 4.4°C (40°F).

Other advantages, novel features, and objects of the invention will become apparent from the following detailed description of the invention when considered in conjunction with the accompanying drawing.

### Detailed Description of the Invention

Commonly-owned U.S. provisional patent application serial no. 60/024,623, entitled "Method and Apparatus for Microcellular Extrusion", filed August 27, 1996 by Burnham, et al.; commonly-owned U.S. provisional patent application serial no. 60/026,889 entitled "Method and Apparatus for Microcellular Extrusion", filed September 23, 1996 by Kim, et al.; Commonly-owned U.S. patent application serial no. 08/777,709, entitled "Method and Apparatus for Microcellular Extrusion", filed December 20, 1996 by Burnham, et al.; International Patent Publication no. WO 98/08667 by Burnham, et al., published March 8, 1998, entitled "Method and Apparatus for Microcellular Extrusion"; and commonly-owned U.S. provisional patent application serial no. 60/035,631, entitled "Injection Molding of Microcellular Material", filed January 16, 1997 by Anderson, et al., each describe a method and an apparatus for microcellular polymeric extrusion.

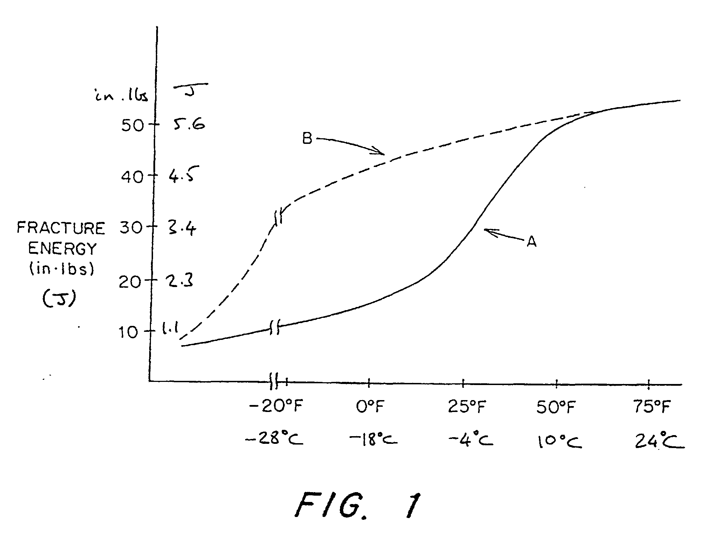

As noted above, the present invention is based upon the applicants' discovery that a microcellular polymeric article shows surprisingly good ductile behavior at low temperature. Fig. 1 is a representation of a shift in ductile/brittle transition temperature to lower temperature that is illustrative of characteristics of microcellular material, as discovered in accordance with the present invention. Fig. 1 is a graph plotting fracture energy as a function of temperature. Curve A is representative of solid, impact-modified polyethylene terephthalate as described below in Example 1. The hypothetical material representing curve A, above a temperature of approximately 4-10°C (40-50°F), exhibits good fracture energy on the order of 5.6J (50 in·lbs). At approximately 4-7°C (40-45°F), however, the fracture energy begins to drop significantly as the temperature drops, reaching an approximate plateau approaching 1.1J (10 in·lbs) below about -4°C (25°F). The portion of the curve of steepest slope, indicating significant drop in impact properties as temperature is lowered, represents the ductile/brittle transition temperature of the material. This material, at freezer temperature, will not exhibit ideal impact properties.

Curve B is representative of a microcellular article, in particular a microcellular polymeric article, of the invention with or without an auxiliary impact modifier. The ductile/brittle transition temperature, characterized by the steepest portion of the curve, is shifted dramatically to a temperature lower than approximately -28°C (-20°F), as illustrated. Above this temperature the material exhibits good impact properties approaching or better than 4.5 - 5.6J (40-50 in·lbs), and impact properties are not reduced to the area approaching 1.1J (10 in·lbs) until the temperature reaches a temperature that is below, perhaps significantly below -7°C (20°F). This material, when used as a freezer storage container, exhibits good impact properties in the range about 4.5J (40 in·lbs).

Fig. 1 does not reflect, precisely, data obtained experimentally but is an illustrative representation of the shift in ductile/brittle transition temperature demonstrated by the examples below. Based upon the examples below it is demonstrated that the ductile/brittle transition temperature is shifted to lower temperature for microcellular material, in particular to temperatures below those typically used in freezing food, but is has not been determined how low the ductile/brittle temperature is shifted. That is, the shift to a temperature below -28°C (-20°F), as illustrated in Fig. 1, may be to a temperature below -18°C (0°F), perhaps well below -18°C(0°F).

For purposes of the present invention, microcellular material is defined as foamed material containing cells of size less than about 100 µm in diameter, or material of cell density of generally greater than at least about 10⁶ cells per cm³, or preferably both. Supermicrocellular material is defined for purposes of the invention by cell sizes smaller than 1 µm and cell densities greater than 10¹² cells per cm³. Ultramicrocellular material is defined for purposes of the invention by cell sizes smaller than 0.1 µm and cell densities greater than 10¹⁵ cells per cm³.

In preferred embodiments, microcellular material of the invention is produced having average cell size of less than about 100 µm, more preferably less than about 25 µm, more preferably less than about 10 µm, and more preferably still less than about 6 µm. The microcellular material preferably has a maximum cell size of about 100 µm, preferably about 30 µm, more preferably about 15 µm. A set of preferred embodiments includes all combinations of these preferred average cell sizes and maximum cell sizes. That is, a preferred embodiment in this set of embodiments includes microcellular material having an average cell size of less than about 10 µm with a maximum cell size of about 30 µm, in a more preferred embodiment an average cell size of less than about 6 um with a maximum cell size of about 15 µm.

The void fraction of microcellular material of the invention generally varies from about 5% to about 98%. Preferably the void fraction is less than about 85%, which can be characteristic of sturdy, well self-supporting material that provides a food container with a feel of durability more suitable for consumer use involving, for example, thawing and heating, re-freezing, re-heating, etc. This is in contrast to higher void fraction materials (typically greater than 85% void fraction) such as meat trays that are designed typically for a single use involving only thawing, and that do not have a look and feel desirable for serving food, even on an informal basis. In this set of embodiments, the void fraction of the microcellular article of the invention preferably is less than about 75%, more preferably less than about 60%, and more preferably still less than or equal to about 50%. Lower void fraction also provides stiffness to an article without increasing thickness, making an article more suitable for use as a plate or bowl out of which to eat food directly.

In one embodiment, essentially closed-cell microcellular material is produced. As used herein, "essentially closed-cell" is meant to define material that, at a thickness greater than of about 200 µm, contains no connected cell pathway through the material.

In the invention, polymeric microcellular articles are provided for low-temperature use. Homopolymers, copolymers, and/or blends can be used, preferably thermoplastic polymeric material with relatively high heat resistance such as PET. polypropylene, high impact polystyrene, maleic anhydride co-polystyrene (e.g. DYLARK™). and the like, optionally including additives. Specifically, polyester polymers are useful including polyesters derived from dibasic acids containing from about 6 to about 40 carbon atoms and glycols containing from about 2 to about 10 carbon atoms, generally crystallizable. Preferred dibasic acids for preparing polyesters include terephthalic acid, isophthalic acid, naphthalenedicarboxylic acid, cyclohexanedicarboxylic acid and the like or their alkyl esters. Preferred dibasic acids, glycols, and polyester copolymers are described in U.S. Patent No. 5,482,977 (McConnell). These polyesters and copolymers and blends thereof can readily be made by those of ordinary skill in the art using conventional techniques. The polymeric article can contain additives such as olefins including acids, esters, anhydride-modified olefins, polycarbonates, impact modifiers, colorants, nucleating agents, mold-release-agents, grafting and cross-linking agents, heat stabilizers, and the like. Use of these additives is known, as described in U.S. Patent No. 5,322,663 (Lai). Other polymeric materials, such as thermoset materials can be used. Polymeric materials such as those described in International Patent Publication no. WO 98/08667 of Burnham, et al., U.S. patent application serial no. 08/777,709, referenced above, and copending, commonly-owned provisional application serial nos. 60/030,731 and 60/035,631, and U.S. Patent Nos. 5,334,356,5,160,674, 5,158,986, and 4,473,665 can be used.

A variety of techniques for forming microcellular material can be used in connection with the invention, including those disclosed in the above-referenced applications of Burnham, et al., Kim, et al, and Anderson, et al., as well as those disclosed in U.S. Patent Nos. 5,158,986, 4,473,665, and 5,160,674. That is, the articles of the invention can be injection molded in final form, can be extruded as a sheet and thermoformed into a final shape, or the like. The particular technique used to form the articles of the invention is not important, as long as microcellular material results.

In one embodiment the invention provides a method of storing a microcellular article at relatively low temperature, such as in a freezer. This means that the article is stored at a temperature of less than about 4.4°C (40°F), typically less than about 0°C (32°F), preferably at or less than about -7°C (20°F), more preferably less than about -12°C (10°F), and more preferably still less than about -15°C (5°F). The article can be a food container including an opening for receiving food and, optionally, can include a lid. The container can be stored with food at these temperatures, and the container with or without food preferably is stored at one of these temperatures for a period of time of at least about 1 hour, more preferably at least about 1 day, or other times as indicated below.

The method embraces storage of an article that is not a food-storage container in a freezer, such as an ice tray, a portable ice storage container such as those that are designed to permanently contain a high-specific-heat fluid, or a fluid which requires much energy to thaw, such as are stored in freezers overnight and carried in lunch boxes during the day to keep food cold. Certain pharmaceutical agents or other medical products are desirably kept frozen, as well as are a variety of chemical reactants. In each of these cases, the improved impact properties of microcellular material make microcellular material particularly suited for storage in a freezer, and methods of storage of these articles in a freezer and articles including instructions for such storage are intended to be within the scope of the invention.

Where the microcellular article is an article for food storage, it can be provided in the shape of a container with an opening in combination with a cover fitted to the opening. The cover can be a lid also made of microcellular material that covers the opening and preferably sealingly engages the opening. The container can include an opening with a matching lid or can include an opening without a matching lid, the opening covered by a clear polymeric film such as that typically used to cover pre-prepared foods for cooking in a conventional oven or for rapid cooking in a microwave oven. These clear, polymeric films can sealingly engage container openings via heat activation, a heat-activated adhesive, or other means of adhesion. An accompanying cover can define a "snap-on dome", can be metal foil, such as aluminum foil, that conforms to the container opening, or the like.

The microcellular article can include instructions for storage of food in the article, such as instructions on a frozen food package or freezer box, or the article can include instructions for storage of the article in a freezer, for example as would accompany a frozen food product, ice tray, or container of pharmaceutical or chemical product desirably kept in a freezer or a freezer pack for a lunch box. The instructions can be printed directly on the container, printed on a label adhered to the container, printed on a box within which the container is stored and/or sold, or the like. The general public is familiar with instructions that accompany consumer products such as those described. The instructions also can include instructions for heating the microcellular article to temperatures significantly above room temperature, for example, temperatures above about 93°C (200°F) for periods of time exceeding 10-20 minutes. These instructions can be for cooking food within the article in a conventional oven at the temperatures and for the times indicated herein, or for cooking food in a microwave oven under conditions given a comparable result in the food product. One advantage associated with food containers having good high-temperature and low-temperature impact properties is that the containers are useful for packaging and selling frozen foods, such as pre-prepared dinners, that can be stored in a freezer and removed from the freezer and placed directly into a conventional or microwave oven in which the food is heated or cooked. Accordingly, a microcellular article can include instructions for storage of the article at a temperature below 4.4°C (40°F), 0°C (32°F), or lower as described above, for example storage in a freezer, and for placement of the article in a conventional or microwave oven, optionally directly after removal from low-temperature conditions. Cooking conditions can involve heating the microcellular article in a conventional oven to a temperature of at least 121°C (250°F) for a period of time of at least 15 minutes, or higher temperatures such as 190°C (375°F) or 175°C (350°F) for periods of time of at least 15 or 45 minutes. In connection with microwave cooking, the food may absorb microwave radiation and therefore be heated to a greater extent than the article. However, if the food is heated to cooking temperatures as described, at least a portion of the interior surface of the article will be heated to the same or nearly the same temperature.

Other combinations of heating and cooling to temperatures under conditions described above can be carried out in accordance with the invention, and the articles of the invention are particularly well-suited to multiple cycles of heating and cooling due to their good impact properties at both high and low temperatures. For example, one method of the invention involves storing a microcellular article at low temperatures, as described above. Another embodiment involves storing the article at low temperature, then subjecting the article to thermal conditions as described above in connection with ovens. In yet another embodiment the article is re-frozen after heating, and in yet another embodiment re-heated after re-freezing. In another set of embodiments the article can be exposed to conditions typical of an oven prior to freezing, that is, the article can be used as a container in which food is cooked, then the food can be frozen in the container and optionally re-heated and re-frozen any number of times. These methods, and articles including instructions for use in accordance with these methods, are intended to be included in the invention. These methods, and articles including instructions for use in accordance with these methods, benefit from the shift to lower temperature of brittle/ductile transition temperature that occurs when the article is a microcellular article.

The function and advantage of these and other embodiments of the present invention will be more fully understood from the examples below. The following examples are intended to illustrate the benefits of the present invention, but do not exemplify the full scope of the invention.

### Example 1: Impact Properties of Impact-Modified Polyethylene Terephthalate Article

Non-foamed, 0.95 I.V.. homopolymeric polyethylene terephthalate (PET) containing linear, low-density polyethylene (∼3.5%) and including conventional acrylic rubber impact modifier particles with compatibilizer (Rohm & Haas, Paraloyd™ EXL 53-75), was extruded as a sheet. The sheet was thermoformed in a heated mold to a crystallinitv of at least about 20% and shaped as a food container having a flat bottom of approximately 0.75mm (30 mils) thickness.

Impact properties (fracture energy; calculated as the area under the force/displacement curve generated) at low and room temperature were tested using an instrumented falling dart (Dynatup) test according to ASTM D3763-92 (high-speed puncture properties of plastics) using load and displacement sensors 48cm (19") drop height; 4 kg drop weight; dart = semispherical, 1.3cm (1/2") diameter tip; clamp opening = 3.8cm (1 1/2") diameter; holding clamp = 6.4cm (2 1/2") diameter; tests were conducted in an environmental chamber, samples were preconditioned for 24 hours prior to testing). At 22°C (72°F), the material exhibited ductile behavior, specifically, the fracture energy of the material was 6.3J (55.8 in·lb). At -29°C (-20°F), the material exhibited brittle behavior, specifically, the fracture energy of the material was 1.2J (10.7 in·lb). These data reflect results averaged from 10 samples tested.

### Example 2: Production and Impact Properties of Impact-Modified Microcellular Polyethylene Terephthalate Article

An extruded sheet essentially identical in material composition to the article of Example 1 was provided, and was processed in a batch microcellular processing chamber as described with reference to Fig. 3 of U.S. Patent No. 5,158,986 (Cha), incorporated herein by reference, with the following details: The high-pressure chamber was maintained under 21 MPa (3000 psi) CO₂ and 43°C (110°F) for approx. 30 hours. After removal of the article from the pressure chamber, the article was foamed in a water bath at 100°C (212°F) for approx. 30 sec. The resultant microcellular article had a void fraction of 50% and crystallinity of at least about 20%. Average cell size was approx. 5-10 µm. The final thickness was 0.9mm (37 mils).

Impact properties at low and room temperature were tested as in Example 1. At 22°C (72°F), the material exhibited ductile behavior. Specifically, the fracture energy of the material was 5.7J (50.5 in·lb). Surprisingly, at -29°C (-20°F) the material exhibited ductile behavior, specifically, the fracture energy of the material was 5.5J (48.6 in·lb). These data reflect results averaged from multiple samples tested.

The result of this example demonstrates that the brittle/ductile transition temperature is shifted from above -29°C (-20°F) when material is non-microcellular to below -29°C (-20°F) when material is essentially identical but microcellular.

### Example 3: Production and Impact Properties of Non-Impact-Modified Microcellular Polyethylene Terephthalate Article

An article essentially identical to the article of Example 2, but without impact modifier, was provided. Microcellular processing was carried out as in Example 2 resulting in material having crystallinity of at least about 20%, with the following exceptions. The article was foamed in an oil bath at approx. 149°C (300°F) for approx. 30 sec. The resultant microcellular article had a void fraction of 50%. Average cell size was approx. 5-10 µm. The final thickness was 0.84mm (33 mils).

Impact properties at low and room temperature were tested as in Example 1. At 22°C (72°F), the material exhibited predominantly ductile behavior, specifically, the fracture energy of the material was 5.5J (48.4 in·lb). Surprisingly, at -29°C (-20°F), the material exhibited ductile behavior, specifically, the fracture energy of the material was 4.4J (38.6 in·lb). These data reflect results averaged from multiple samples tested.

The result of this example indicates that the brittle/ductile transition temperature of this non-impact-modified PET is shifted from above -29°C (-20°F) when material is non-micocellular to below -29°C (-20°F) when the material is microcellular.

### Summary of Examples

The examples above demonstrate that a non-foamed. PET, impact-modified extruded sheet shows room temperature ductile behavior, and low temperature brittle behavior while, surprisingly, the same material processed as a microcellular material exhibits ductile low-temperature behavior and, even more surprisingly, the same material processed as microcellular material and *absent* impact modifier exhibits low temperature ductile behavior. That is, the brittle/ductile transition temperature of polymeric material, when processed as microcellular polymeric material, is shifted downward to a range of below typical freezer storage conditions.

Those skilled in the art would readily appreciate that all parameters listed herein are meant to be exemplary and that actual parameters will depend upon the specific application for which the methods and apparatus of the present invention are used.

## Claims

1. A method for low-temperature storage comprising the step of storing in a container formed from a microcellular material at a temperature of less than 4.4°C (40°F), the microcellular material containing cells of a size less than 100 µm in diameter and/or having a cell density of more than 10⁶ cells/cm³.

2. A method according to Claim 1, wherein the container is stored for at least one hour.

3. A method according to Claim 1 or 2, wherein the container is stored at a temperature of less than 0°C (32F°).

4. A method according to any preceding Claim, wherein the container is stored at a temperature of less than -6.7°C (20°F).

5. A method according to any preceding Claim, wherein medical products or chemical reactants are stored in the container.

6. A method according to any of Claims 1-4, wherein food is stored in the container.

7. A method according to Claim 6, further comprising the step of cooking the food in the container.

8. A method according to Claim 7, wherein the cooking step comprises heating the food and the container to a temperature of at least 121°C (250°F) for at least 10 minutes.

9. A method according to Claim 7 or Claim 8, wherein the cooking step is carried out in a microwave oven.

10. A container formed from a microcellular material, containing frozen food, a frozen medical product or a frozen chemical reactant, the material containing cells of a size less than 100 µm in diameter and/or having a cell density of more than 10⁶ cells/cm³.

11. A container according to Claim 10 having an opening.

12. A container according to Claim 11, wherein a cover is fitted to the opening.

13. A container according to Claim 12, wherein the cover is a lid which sealingly engages the container opening.

14. A container according to Claim 13, wherein the lid is a plastic film which adheres to the portion of the container defining the opening.

15. A container according to Claim 10, which is an ice tray or a portable ice storage container.

16. A container according to any of Claims 10-15, wherein the container is formed from a polymeric microcellular material.

17. A container according to any of Claims 10-16, wherein the container is formed from a microcellular material having an average cell size of less than 25 µm.

18. A container according to Claim 17, wherein the average cell size is less than 10 µm.

19. A container according to Claim 18, wherein the average cell size is less than 6 µm.

20. A container according to any of Claims 10-19, wherein the container is formed from a microcellular material having a maximum cell size of less than 100 µm.

21. A container according to Claim 20, wherein the maximum cell size is 30 µm.

22. A container according to Claim 21, wherein the maximum cell size is 15 µm.

23. A container according to any of Claims 10-22, wherein the container is formed from an essentially closed cell microcellular material.

24. A container according according to any of Claims 10-23, wherein the container is formed from a material which contains an auxiliary impact modifier.

25. A container according to any of the preceding Claims 10-23, wherein the container is formed from a material which is free of an auxiliary impact modifier.

26. A container according to any of Claims 10-25, wherein the container is formed from PET, polypropylene, high-impact polystyrene or maleic anhydride co-polystyrene.

27. A container according to Claim 26, wherein the container is formed from PET.

28. A container according to any of Claims 10-27, which is formed from a material having a heat resistance of at least 100°C.

29. The use of a container formed from a microcellular material containing cells of a size less than 100 µm in diameter and/or having a cell density of more than 10⁶ cells/cm³ as a storage container at a temperature of less than 4.4°C (40°F).

## Patentansprüche

1. Verfahren für eine Lagerung bei niedriger Temperatur umfassend den Schritt der Lagerung in einem Behälter, gebildet aus einem mikrozellulären Material bei einer Temperatur von weniger als 4,4°C (40°F), wobei das mikrozelluläre Material Zellen mit einer Größe von weniger als 100 µm im Durchmesser und/oder einer Zelldichte von mehr als 10⁶ Zellen/cm³ enthält.

2. Verfahren gemäß Anspruch 1, wobei der Behälter für mindestens eine Stunde gelagert wird.

3. Verfahren gemäß Anspruch 1 oder 2, wobei der Behälter bei einer Temperatur von weniger als 0°C (32°F) gelagert wird.

4. Verfahren gemäß einem der vorstehenden Ansprüche, wobei der Behälter bei einer Temperatur von weniger als -6,7°C (20°F) gelagert wird.

5. Verfahren gemäß einem der vorstehenden Ansprüche, wobei medizinische Produkte oder chemische Reagenzien in dem Behälter gelagert werden.

6. Verfahren gemäß einem der Ansprüche 1 bis 4, wobei Lebensmittel in dem Behälter gelagert werden.

7. Verfahren gemäß Anspruch 6, weiterhin umfassend den Schritt des Kochens der Lebensmittel in dem Behälter.

8. Verfahren gemäß Anspruch 7, wobei der Kochschritt die Erwärmung der Lebensmittel und des Behälters auf eine Temperatur von mindestens 121°C (250°F) für mindestens 10 Minuten umfaßt.

9. Verfahren gemäß Anspruch 7 oder 8, wobei der Kochschritt in einer Mikrowelle durchgeführt wird.

10. Behälter, gebildet aus einem mikrozellulären Material, enthaltend tiefgefrorene Lebensmittel, ein tiefgefrorenes medizinisches Produkt oder ein tiefgefrorenes chemisches Reagens, wobei das Material Zellen mit einer Größe von weniger als 100 µm im Durchmesser und/oder einer Zelldichte von mehr als 10⁶ Zellen/cm³ enthält.

11. Behälter gemäß Anspruch 10 mit einer Öffnung.

12. Behälter gemäß Anspruch 11, wobei eine Abdeckung über der Öffnung angepaßt ist.

13. Behälter gemäß Anspruch 12, wobei die Abdeckung ein Deckel ist, der die Behälteröffnung versiegelnd abschließt.

14. Behälter gemäß Anspruch 13, wobei der Deckel eine Plastikfolie ist, die an dem Teil des Behälters haftet, der die Öffnung definiert.

15. Behälter gemäß Anspruch 10, wobei es sich um ein Eistablett oder tragbaren Eislagerbehälter handelt.

16. Behälter gemäß einem der Ansprüche 10 bis 15, wobei der Behälter aus einem polymeren mikrozellulären Material gebildet wird.

17. Behälter gemäß einem der Ansprüche 10 bis 16, wobei der Behälter aus einem mikrozellulären Material gebildet wird mit einer durchschnittlichen Zellgröße von weniger als 25 µm.

18. Behälter gemäß Anspruch 17, wobei die durchschnittliche Zellgröße weniger als 10 µm beträgt.

19. Behälter gemäß Anspruch 18, wobei die durchschnittliche Zellgröße weniger als 6 µm beträgt.

20. Behälter gemäß einem der Ansprüche 10 bis 19, wobei der Behälter aus einem mikrozellulären Material mit einer maximalen Zellgröße von weniger als 100 µm gebildet wird.

21. Behälter gemäß Anspruch 20, wobei die maximale Zellgröße 30 µm beträgt.

22. Behälter gemäß Anspruch 21, wobei die maximale Zellgröße 15 µm beträgt.

23. Behälter gemäß einem der Ansprüche 10 bis 22, wobei der Behälter aus einem mikrozellulären Material mit im wesentlichen geschlossenen Zellen gebildet wird.

24. Behälter gemäß einem der Ansprüche 10 bis 23, wobei der Behälter aus einem Material gebildet wird, das einen zusätzlichen schlagzähmachenden Zusatzstoff enthält.

25. Behälter gemäß einem der vorstehenden Ansprüche 10 bis 23, wobei der Behälter aus einem Material gebildet wird, das frei ist von einem zusätzlichen Schlagzähmachungszusatzstoff.

26. Behälter gemäß einem der Ansprüche 10 bis 25, wobei der Behälter aus PET, Polypropylen, sehr schlagzähem Polystyrol oder Maleinsäureanhydrid-copolystyrol gebildet wird.

27. Behälter gemäß Anspruch 26, wobei der Behälter aus PET gebildet wird.

28. Behälter gemäß einem der Ansprüche 10 bis 27, der aus einem Material gebildet ist, das eine Wärmebeständigkeit von mindestens 100°C aufweist.

29. Verwendung eines Behälters, gebildet aus einem mikrozellulären Material, enthaltend Zellen mit einer Größe von weniger als 100 µm im Durchmesser und/oder einer Zelldichte von mehr als 10⁶ Zellen/cm³ als Lagerbehälter bei einer Temperatur von weniger als 4,4°C (40°F).

## Revendications

1. Procédé d'entreposage à basse température comprenant l'étape d'entreposage dans un récipient formé d'un matériau microcellulaire à une température inférieure à 4,4°C (40°F), le matériau microcellulaire contenant des cellules d'une taille inférieure à 100 µm de diamètre et/ou ayant une densité cellulaire de plus de 10⁶ cellules/cm³.

2. Procédé selon la revendication 1, dans lequel le récipient est stocké pendant au moins une heure.

3. Procédé selon la revendication 1 ou 2, dans lequel le récipient est stocké à une température inférieure à 0°C (32°F).

4. Procédé selon l'une quelconque des revendications précédentes, dans lequel le récipient est stocké à une température inférieure à -6,7°C (20°F).

5. Procédé selon l'une quelconque des revendications précédentes, dans lequel des produits médicaux ou réactifs chimiques sont stockés dans le récipient.

6. Procédé selon l'une quelconque des revendications 1 à 4, dans lequel un aliment est stocké dans le récipient.

7. Procédé selon la revendication 6, comprenant, en outre, l'étape de cuisson de l'aliment dans le récipient.

8. Procédé selon la revendication 7, dans lequel l'étape de cuisson comprend le chauffage de l'aliment et du récipient à une température d'au moins 121°C (250°F) pendant au moins 10 minutes.

9. Procédé selon la revendication 7 ou 8, dans lequel l'étape de cuisson est conduite dans un four à micro-ondes.

10. Récipient formé d'un matériau microcellulaire, contenant un aliment surgelé, un produit médical surgelé ou un réactif chimique surgelé, le matériau contenant des cellules d'une taille inférieure à 100 µm de diamètre et/ou ayant une densité cellulaire de plus de 10⁶ cellules/cm³.

11. Récipient selon la revendication 10 comprenant une ouverture.

12. Récipient selon la revendication 11, dans lequel un couvercle de fermeture est fixé à l'ouverture.

13. Récipient selon la revendication 12, dans lequel le couvercle de fermeture est un couvercle relevant qui se met en prise de manière étanche avec l'ouverture du récipient.

14. Récipient selon la revendication 13, dans lequel le couvercle relevant est une feuille en matière plastique qui adhère à la partie du récipient définissant l'ouverture.

15. Récipient selon la revendication 10, qui est un récipient à bac à glaçons ou un récipient d'entreposage de glaçons transportable.

16. Récipient selon l'une quelconque des revendications 10 à 15, dans lequel le récipient est formé d'un matériau microcellulaire polymère.

17. Récipient selon l'une quelconque des revendications 10 à 16, dans lequel le récipient est formé d'un matériau microcellulaire ayant une taille de cellule moyenne de moins de 25 µm.

18. Récipient selon la revendication 17, dans lequel la taille de cellule moyenne est inférieure à 10 µm.

19. Récipient selon la revendication 18, dans lequel la taille de cellule moyenne est inférieure à 6 µm.

20. Récipient selon l'une quelconque des revendications 10 à 19, dans lequel le récipient est formé d'un matériau microcellulaire ayant une taille de cellule maximale de moins de 100 µm.

21. Récipient selon la revendication 20, dans lequel la taille de cellule maximale est de 30 µm.

22. Récipient selon la revendication 21, dans lequel la taille de cellule maximale est de 15 µm.

23. Récipient selon l'une quelconque des revendications 10 à 22, dans lequel le récipient est formé d'un matériau microcellulaire à cellule essentiellement fermée.

24. Récipient selon l'une quelconque des revendications 10 à 23, dans lequel le récipient est formé d'un matériau qui contient un agent modificateur de la résistance aux chocs auxiliaire.

25. Récipient selon l'une quelconque des revendications précédentes 10 à 23, dans lequel le récipient est formé d'un matériau qui est dépourvu d'agent modificateur de la résistance aux chocs auxiliaire.

26. Récipient selon l'une quelconque des revendications 10 à 25, dans lequel le récipient est formé de PET, polypropylène, polystyrène à résistance élevée au choc ou copolystyrène anhydre de l'acide maléique.

27. Récipient selon la revendication 26, dans lequel le récipient est formé de PET.

28. Récipient selon l'une quelconque des revendications 10 à 27, qui est formé d'un matériau ayant une résistance à la chaleur d'au moins 100°C.

29. Utilisation d'un récipient formé d'un matériau microcellulaire contenant des cellules d'une taille inférieure à 100 µm de diamètre et/ou ayant une densité cellulaire de plus de 10⁶ cellules/cm³ comme récipient d'entreposage à une température de moins de 4,4°C (40°F).
